# EUROPÄISCHE PATENTANMELDUNG

(11) **EP 1 693 345 A1**
(43) Veröffentlichungstag der Anmeldung: **23.08.2006**
(21) Anmeldenummer: 06000008.0
(22) Anmeldetag: 02.01.2006
(51) Int. Cl.: C02F 3/12, C02F 3/30

(54) **Verfahren zur verbesserten Denitrifikation und Bio-P-Elimination beim SBR-Verfahren**

(30) Priorität: 18.02.2005 DE 102005007408
(71) Anmelder: Holm, Niels Christian, 32425 Minden (DE)
(72) Erfinder: Holm, Niels Christian, 32425 Minden (DE)
(74) Vertreter: Biehl, Christian

(57) **Zusammenfassung**

Verfahren zur Abwasserreinigung in einer mit mindestens einem SB-Reaktor versehenen SBR-Anlage, bei dem Abwasser in den mindestens einen SB-Reaktor gefördert wird und Abwassers in den SB-Reaktor beginnend 10 min vor bis 10 min nach Beginn der Sedimentationsphase derart zugeführt wird, dass die Zuführmenge in Verlaufe der Zuführung nicht den sich zeitgleich absetzenden Belebtschlamm durchbricht.

## Beschreibung

Die Erfindung betrifft ein Verfahren zur Abwasserbehandlung in einer SBR (Sequencing-Batch-Reaktor)-Anlage.

Bei vielen kommunalen, industriellen und gewerblichen Abwasserreinigungsanlagen sind in den letzten beiden Jahrzehnten Verfahrensschritte zur Realisierung und/oder Verbesserung der Denitrifikation und biologischen P-Elimination integriert worden.

Dieses ist ökonomisch sehr vorteilhaft, da die nach der EU-Wasser-Rahmen-Richtlinie EU-WRRL und dem deutschen Wasserhaushaltsgesetz WHG erforderlichen P-Eliminationsraten nicht in erster Linie mit chemischen Methoden mittels Fällmittelzugabe, sondern überwiegend rein biologisch durch vermehrte P-Aufnahme des Belebtschlammes erreicht werden. Damit können große Mengen an Fällmittel eingespart werden, der auf Basis der Fällmittelzugabe zusätzlich produzierte chemische Überschussschlamm, der meist sehr teuer entsorgt/verwertet werden muss, entfällt.

Dies ist ökologisch sehr vorteilhaft, weil die mit der Fällmittelzugabe (meistens Eisen III Salze) einhergehende Aufsalzung der Vorfluter reduziert wird. Zudem enthalten viele Fällmittel nicht unerhebliche Mengen an Schwermetallen, deren unvermeidliche Verteilung auf die Überschussschlämme und die Vorfluter ökologisch bedenklich sind.

Mit Verbesserung der Denitrifikation kann der Nitrat-Ablaufwert und somit meistens auch der Gesamt-Stickstoff-Ablaufwert mit entsprechenden Vorteilen hinsichtlich der Reinigungsleistung reduziert werden. Auch der Energieverbrauch wird dadurch reduziert, da eine Nutzung von Nitrat als Elektronenakzeptor bei der Atmung die erforderliche Sauerstoffzufuhr und somit die Gebläseleistung verringert.

Alle Verfahren zur biologischen P-Elimination beruhen auf der positiven Selektionierung von speziellen Bakterien, den so genannten Bio-P-Bakterien, die weitaus mehr Phosphor speichern bzw. einlagern können, als sie ihr Wachstum benötigen. Der P-Gehalt von Bio-P-Bakterien kann 5% P bezogen auf die Zelltrockenmasse TS übersteigen, während der Gehalt unter normalen Umständen nur bei ca. 1,5% liegt.

Bei all diesen Verfahren ist ein zyklischer Wechsel zwischen anaeroben und oxischen/anoxischen Zuständen die Grundvorrausetzung für eine stabile Bio-P-Elimination. Unter anaeroben Bedingungen darf zudem der Nitratgehalt nicht zu hoch sein. Nitrat-Konzentrationen über 5 mg/l hemmen die Bio-P-Elimination deutlich, Sauerstoff darf nur maximal in Spuren möglichst unter 0,1 mg/l vorhanden sein. Daher führt eine Verbesserung der Denitrifikation an sich schon zu einer Verbesserung der biologischen P-Elimination. Weiter muss unter anaeroben Bedingungen leicht abbaubarer Kohlenstoff, z.B. in Form kurzkettiger organischer Fettsäuren wie Azetat vorhanden sein.

Bei Vorliegen all dieser Vorraussetzungen werden die Bio-P-Bakterien positiv selektioniert und folgende P-Dynamik kann dann beobachtet werden:

Unter anaeroben Bedingungen wird der leicht abbaubare Kohlenstoff vom Belebtschlamm (bzw. von den Bio-P-Bakterien im Belebtschlamm) aufgenommen und gleichzeitig Phosphor in das umgebende Wasser freigesetzt. Im Rahmen der nachfolgenden aeroben Bedingungen wird deutlich mehr Phosphor als für das reine Wachstum erforderlich wieder aufgenommen und in den Zellen überwiegend als Polyphosphat abgespeichert. Mit regelmäßiger Entnahme eines Teils des Belebtschlammes als Überschussschlamm wird dann dieser vermehrt aufgenommene Phosphor dem Abwasser entnommen.

Zur Verstärkung bzw. Verlängerung dieser Anaerobphasen sind schon einige Verfahrenskonzepte entwickelt worden: In der WO 93/04759 und in der US 5,395,527 wird vorgeschlagen, eine gewisse Zeit nach Beginn der Sedimentationsphase die Beschikkung der Reaktoren mehr oder weniger flächig auf der Reaktorsohle durchzuführen. Dabei wird das Rohabwasser von unten durch das sedimentierte Belebtschlammbett hindurchgedrückt. Mit dieser spezifischen Form der Beschickung eine erhebliche Zeit nach Beginn der Sedimentationsphase wird gleichzeitig der Klarwasserüberstand verdrängt bzw. dekantiert, d.h. diese Beschickung ist an die Dekantierung gekoppelt und kann erst nach einer erheblichen Sedimentationszeit beginnen, damit die verdrängte Charge nur aus gereinigtem Klarwasser besteht.

Der Prozess der Denitrifikation und P-Rücklösung und damit der Bio-P-Prozess als solcher wird begünstigt. Allerdings ist die Ausführung einer nahezu sohlflächigen Reaktorbeschickung sehr teuer und vor Beginn der Beschickung muss eine erhebliche nicht reaktive Sedimentationszeit (ca. eine Stunde) abgewartet werden, damit sich ein ausreichender Klarwasserüberstand ausgebildet hat.

In der US 5,013,441 wird vorgeschlagen, in den Reaktorzulaufbereich einen anoxischen/anaeroben Selektor zu installieren, in den mehr oder weniger kontinuierlich Belebtschlamm quasi als Rücklaufschlamm aus den anderen Reaktorbereichen geführt wird. Auch damit kann die Bio-P-Elimination begünstigt werden, wobei allerdings nur eine recht geringe Belebtschlammkonzentration diesen positiven Bedingungen ausgesetzt wird. Zudem verbleibt die Sedimentations- und Dekantierzeit weiterhin unreaktiv.

In der EP 0834474 wird vorgeschlagen, die biologische P-Elimination in den Reaktoren durch einen spezifisch hydrolisierenden Betrieb eines vorgeschalteten Pufferbehälters zu begünstigen. Dieses Verfahren ist großtechnisch in bisher 15 Kläranlagen hinsichtlich der Bio-P-Elimination mit Erfolg realisiert worden. Allerdings wird auch hier die Bio-P-Elimination bei Mischwasserzuläufen mit hohen Sauerstoff- und Nitratgehalten gehemmt und die Sedimentations- und Dekantierzeiten verbleiben weiterhin unreaktiv wobei unreaktiv bedeutet, dass während dieser Zeit keine nennenswerten biologischen Prozesse ablaufen.

Da während der Sedimentations- und Dekantierzeit nicht belüftet wird, handelt es sich bei den angesprochenen biologischen Prozessen um die anoxischen und anaeroben Prozesse der Hydrolyse makromolekularer organischer Substanzen, der Denitrifikation und der biologischen P-Rücklösung als zentralem Schritt der biologischen P-Elimination. Bis zum Beginn der Sedimentationszeit ist die oxische Kohlenstoffelimination und ggf. die Nitrifikation üblicherweise eingeschlossen, so dass für die obigen biologischen Prozesse die organischen Substrate fehlen. Tatsächlich sind diese Prozesse während der Sedimentationsphase jedoch nicht völlig unterbunden, da durch Absterben eines kleinen Teils der Biomasse kontinuierlich eine geringe Substratmenge entsteht. Diese sind jedoch so gering, dass die Sedimentations- und Dekantierzeiten rein bemessungstechnisch als unreaktiv gelten und entsprechend dimensioniert werden, eben weil in diesen Zeiten keine nennenswerten Substratmengen zur Verfügung stehen.

Aufgabe der Erfindung ist es deshalb, ein Verfahren bereit zu stellen, bei dem die ganze oder ein Großteil der Sedimentations- und Dekantierzeit mittels Denitrifikation und biologischer P-Elimination auch als Reaktivphase genutzt wird.

Diese Aufgabe wird gelöst durch ein Verfahren mit den Merkmalen des Anspruchs 1, die Unteransprüche geben bevorzugte Ausgestaltungen dieses Verfahrenes an.

Erfindungsgemäß erfolgt die Beschickung des SB-Behälters also derart, dass das zugeführte Rohabwasser im unteren Reaktorbereich verbleibt (d.h. nicht das sich zeitgleich absetzende Schlammvolumen durchbricht), das nachfolgende Klarwasserdekantat also nicht mit Rohabwasser kontaminiert wird.

Diese Beschickung erfolgt vorzugsweise an nur einer Stelle im peripheren Bereich der Reaktorsohle in horizontal gleicher Richtung wie die Bewegung des Reaktorinhaltes (die auf Grund des Trägheitsprinzipes der Masse nach Abstellen der Umwälzeinrichtungen noch einige Zeit nachrühren). Der Beginn dieser Beschickung erfolgt frühestens 10 min vor Beendigung der Umwälzung im Reaktor und spätestens 10 min nach der Beendigung der Umwälzung und darf bis ca. 30 min nach Beendigung der Umwälzung andauern, aber nur so lange bis der Reaktorinhalt nicht mehr nachrührt, weil sonst ein Durchbruch nach oben erfolgen würde).

Je nach Reaktorgeometrie und aktuellem Nutzvolumen darf die Beschickungsmenge in l/s einen bestimmten Grenzwert nicht überschreiten, damit kein nennenswerter Eintrag des Rohabwassers in das sich überstehend bildende Klarwasser erfolgt.

Dieser Grenzwert (rein physikalisch/hydraulisch bestimmt durch die Konfiguration der Zuführleitung und der Reaktorgeometrie) kann empirisch und/oder mittels dynamischer Simulation ermittelt werden und dient dann für diese Beschickung fortan als oberer Grenzwert, der z.B. eingehalten wird über eine entsprechende Pumpenbeschickungsregelung.

Eine weitere vorzugsweise Ausführung der Erfindung erfolgt wie oben beschrieben, allerdings mit mehreren Zuführstellen. Beispielsweise wird die periphere, in den Sohlbereich horizontal geführte Beschickungsleitung mit mehreren tangentialen Öffnungen versehen, die gewährleisten, dass der Wasseraustritt überwiegend horizontal in Strömungsrichtung des Reaktorinhaltes erfolgt. Im Vergleich zur ersten Ausführungsvariante kann damit eine deutlich höhere Beschickungsmenge realisiert werden, ohne dass ein Durchbruch in das obere sich bildende Klarwasser erfolgt.

Bei einer Realisierung dieses Verfahrens kann ein Großteil oder die ganze Sedimentations- und Dekantierzeit in die reaktiven anoxischen und anaeroben Phasen einbezogen werden. Die üblichen reaktiven Phasen außerhalb der Sedimentations- und Dekantierzeiten können entsprechend verkürzt werden, indem sie im wesentlichen auf die oxische Phase und ggf. eine kurze Restdenitrifikationsphase beschränkt werden. Um das entsprechende Verhältnis kann das erforderliche Reaktorvolumen mit entsprechenden Einsparungen an Investitionskosten reduziert werden.

Ein weiterer Vorteil besteht darin, dass diese spezifische Form der Beschickung unter dem sich absetzendem Schlammvolumen einen Reaktionsraum generiert, bei dem sowohl die Belebtschlammkonzentration als auch die Schmutzfrachtkonzentrationen stark erhöht sind. Dieses hat reaktionskinetisch große Vorteile für die entsprechenden Reaktionsgeschwindigkeiten.

Weiter ergeben sich große Vorteile in bezug auf Auswirkungen auf die Flockenstruktur: Je höher die Abwasserkonzentrationen sind (analog dem plug flow Prinzip) je positiver sind üblicherweise die Auswirkungen auf den Schlammindex, d.h. die kompakteren Schlammflocken werden positiv selektioniert und es bildet sich ein vergleichsweise geringer Schlammindex.

Dieser Vorteil wird noch dadurch verstärkt, dass sich die sich am schnellsten absetzenden Schlammflocken (d.h. die, die zu einem besonders geringen Schlammindex beitragen) im statistischem Mittel im unteren Bereich des Schlammbettes anreichen, in dem Bereich also, in dem das Rohabwasser am geringsten mit dem Reaktorinhalt verdünnt wird. Dadurch werden die am schnellsten absetzenden Schlammflocken am stärksten positiv selektioniert und die Einstellung eines geringen Schlammindexes wird gefördert.

Dieses Verfahren kann auch bei Vorschaltung eines oder mehrerer Pufferbehälter realisiert werden.

Ohne vorgeschaltetem Pufferbehälter muss die ganze Zulaufabwassermenge in einen Reaktor gefördert werden. In diesem Fall kann/können die Zuführleitung(en) in den/die Reaktor(en) so (d.h. in den meisten Fällen mit mehreren Zuführstellen) ausgebildet werden, dass auch die maximale Zulaufwassermenge bei Sedimentationsbeginn zugeführt werden kann, ohne dass ein Abwasserdurchbruch durch das Schlammvolumen stattfindet.

Alternativ können die Zuführbedingungen weniger aufwendig ausgebildet werden, so dass eine Beschickung bei Sedimentationsbeginn nur stattfindet, wenn ein definierter Zulaufgrenzwert unterschritten ist.

Mit Vorschaltung eines oder mehrerer Pufferbehälter können die Reaktorbeschikkungen dagegen weitgehend entkoppelt von den aktuellen Zulaufmengen nahezu frei gewählt werden. Daher können auch die Beschickungen beim Sedimentationsbeginn durch eine entsprechend angepasste Steuerung der Förderung unterhalb der schädlichen Grenzwerte kontrolliert werden. Ansonsten kann auch in diesem Fall eine übergeordnete Regelung implementiert werden, die die Beschickung bei Sedimentationsbeginn unterbindet, wenn sonst eine zu hohe Menge in den Reaktor gefördert werden würde.

## Patentansprüche

1. Verfahren zur Abwasserreinigung in einer mit mindestens einem SB-Reaktor versehenen SBR-Anlage, bei dem Abwasser in den mindestens einen SB-Reaktor gefördert wird,
**gekennzeichnet durch**
Zuführen des Abwassers in den SB-Reaktor beginnend 10 min vor bis 10 min nach Beginn der Sedimentationsphase derart, dass die Zuführmenge in Verlaufe der Zuführung nicht den sich zeitgleich absetzenden Belebtschlamm durchbricht.

2. Verfahren nach Anspruch 1, **dadurch gekennzeichnet, dass** dem SB-Reaktor mindestens ein Pufferbehälter vorgeschaltet ist.

3. Verfahren nach Anspruch 1 oder 2, **gekennzeichnet durch** Beenden des Zuführens des Abwassers in den SB-Reaktor nach Enden der Bewegung des Reaktorinhaltes, jedoch vor Beginn des Dekantierens.

4. Verfahren nach einem der vorangehenden Ansprüche, **dadurch gekennzeichnet, dass** die Zuführung nur an einer Stelle im peripheren Bereich der Reaktorsohle in der horizontalen Bewegungsrichtung des Reaktorinhaltes erfolgt.

5. Verfahren nach einem der Ansprüche 1 bis 3, **dadurch gekennzeichnet, dass** die Zuführung an mehreren Stellen in Form tangentialer Öffnungen im peripheren Bereich der Reaktorsohle in der horizontalen Bewegungsrichtung des Reaktorinhaltes erfolgt.

6. Verfahren nach einem der vorangegangenen Ansprüche, **gekennzeichnet durch** Begrenzen der Zuführmenge mit Hilfe einer Mengenmessregelung der Beschikkungspumpen oder einer Einregelung der Pumpendrehzahlen derart, dass der sich bildende Klarwasserüberstand nicht mit Rohabwasser kontaminiert wird.
